# EUROPÄISCHE PATENTANMELDUNG

(11) **EP 0 876 840 A1**
(43) Veröffentlichungstag der Anmeldung: **11.11.1998**
(21) Anmeldenummer: 98810397.4
(22) Anmeldetag: 01.05.1998
(51) Int. Cl.: B01D 53/22

(54) **Verfahren und Vorrichtung zur Rückgewinnung, Aufkonzentrierung oder Abreicherung von dampf- und/oder gasförmigen Stoffen aus einem dampf- und/oder gasförmigen Stoffgemisch**

(30) Priorität: 05.05.1997 EP 97810281
(71) Anmelder: ALUMINIUM RHEINFELDEN GmbH, 79618 Rheinfelden (DE)
(72) Erfinder: Hoesch, Denis, 68720 Saint-Bernard (FR); Krey, Günter, 79618 Rheinfelden (DE)
(74) Vertreter: Patentanwälte Breiter + Wiedmer AG

(57) **Zusammenfassung**

Bei einem Verfahren zur Rückgewinnung von Kohlenwasserstoffen aus einem ein Kohlenwasserstoff-Luftgemisch enthaltenden Rohgasstrom (10) in einer Anlage erfolgt eine kontinuierliche Trennung mittels einer Membraneinheit (22) in ein kohlenwasserstoffreiches (26) und ein kohlenwasserstoffarmes Gemisch (24), wobei das aus der Membraneinheit austretende kohlenwasserstoffarme Gemisch (24) als gereinigte Abluft an die Atmosphäre abgegeben, einer weiteren Nachbehandlungsstufe zugeführt oder recykliert wird. Ein den maximalen Volumendurchsatz der Membraneinheit (22) übersteigender Volumenanteil des Rohgasstromes (10) bzw. die in diesem Volumenanteil enthaltenen Kohlenwasserstoffe wird vor Eintritt in die Membraneinheit zwischengespeichert und in Zeiten, wo der Rohgasstrom kleiner ist als der maximale Volumendurchsatz der Membraneinheit, der Anlage wieder zugeführt. Bei einer alternativen Verfahrensführung wird der den maximalen Volumendurchsatz der Membraneinheit (22) übersteigende Volumenanteil des Rohgasstromes (10) über eine zur ersten Membraneinheit parallel geschaltete zweite Membraneinheit (44) geleitet. Durch die Möglichkeit einer Zwischenspeicherung bzw. durch den zeitweiligen Einsatz einer parallel geschalteten zweiten Membraneinheit kann die Grösse einer Aufbereitungsanlage für eine durchschnittlich auftretende Dämpfemenge ausgelegt werden.

## Beschreibung

Die Erfindung betrifft ein Verfahren zur Rückgewinnung, Aufkonzentrierung oder Abreicherung von dampf- und/oder gasförmigen Stoffen aus einem ein dampf- und/oder gasförmiges Stoffgemisch enthaltenden Rohgasstrom in einer Anlage durch kontinuierliche Trennung mittels einer Membraneinheit. Im Rahmen der Erfindung liegt auch eine zur Durchführung des Verfahrens geeignete Vorrichtung sowie ein spezieller Anwendungsbereich des Verfahrens bzw. der Vorrichtung.

Die Erfindung betrifft insbesondere ein Verfahren zur Rückgewinnung von Kohlenwasserstoffen aus einem ein Kohlenwasserstoff-Luftgemisch enthaltenden Rohgasstrom in einer Anlage durch kontinuierliche Trennung in ein kohlenwasserstoffreiches und ein kohlenwasserstoffarmes Gemisch mittels einer Membraneinheit, wobei das aus der Membraneinheit austretende kohlenwasserstoffarme Gemisch als gereinigte Abluft an die Atmosphäre abgegeben, einer weiteren Nachbehandlung zugeführt oder recykliert wird.

Bei Verladestationen zur Beladung von Tankkraftfahrzeugen mit Benzin schwankt die durch den Betankungsvorgang aus den Tanks verdrängte und in einer nachgeschalteten Rückgewinnungsanlage aufzubereitende Dämpfemenge je nach Anzahl zu betankender Fahrzeuge ausserordentlich stark. Zum Teil sehr kurzfristig auftretende Spitzen stehen im Wechsel mit Zeiten stark unterdurchschnittlicher Dämpfemengen. Zur Schwankung der Dämpfemenge tragen auch andere Ursachen bei. So wird beispielsweise der zu behandelnde Volumenstrom durch thermische und atmosphärische Effekte beeinflusst.

Eine optimal ausgelegte Aufbereitungsanlage sollte in der Lage sein, auch eine kurzfristig ansteigende Dämpfemenge aufzunehmen, da andernfalls ein Teil des mit Kohlenwasserstoffen stark beladenen Rohgasstromes ungereinigt an die Atmosphäre abgegeben werden müsste.

Auf dem Prinzip der Membrantrennung kontinuierlich arbeitende Anlagen zur Aufbereitung von Kohlenwasserstoffen aus einem diese enthaltenden Rohgasstrom sind in ihrer Leistung durch die den maximalen Volumendurchsatz bestimmende Anlagegrösse begrenzt. Eine Anlage dieser Art müsste demzufolge auf die höchste pro Zeiteinheit zu erwartende Dämpfemenge ausgelegt werden, um den anfallenden Rohgasstrom jederzeit vollständig aufnehmen zu können. Eine zur Verarbeitung von Dämpfespitzen ausgelegte Anlage wäre jedoch die meiste Zeit derart schlecht ausgelastet, dass deren Betriebskosten in keinem vernünftigen Verhältnis zur anfallenden Dämpfemenge stehen würde.

Verfahren sowie Vorrichtungen zur Aufbereitung von Kohlenwasserstoff-Luftgemischen mittels einer Membraneinheit sind beispielsweise aus der EP-B-0 247 585 bekannt.

Der Erfindung liegt die Aufgabe zugrunde, ein Verfahren der eingangs genannten Art sowie eine zur Durchführung des Verfahrens geeignete Vorrichtung zu schaffen, mit denen auch stark schwankende Rohgasmengen auf energetisch günstige Weise aufgearbeitet werden können.

Zur erfindungsgemässen Lösung führt bezüglich des Verfahrens, dass ein den maximalen Volumendurchsatz der Membraneinheit übersteigender Volumenanteil des Rohgasstromes bzw. die in diesem Volumenanteil enthaltenen dampf- und/oder gasförmigen Stoffe oder Kohlenwasserstoffe vor Eintritt in die Membraneinheit zwischengespeichert und in Zeiten, wo der Rohgasstrom kleiner ist als der maximale Volumendurchsatz der Membraneinheit, der Anlage wieder zugeführt wird.

Eine zweite erfindungsgemässe Lösung der Aufgabe besteht darin, einen den maximalen Volumendurchsatz der Membraneinheit übersteigenden Volumenanteil des Rohgasstromes über eine zur ersten Membraneinheit parallel geschaltete zweite Membraneinheit zu leiten.

Die den beiden vorgeschlagenen Lösungen zugrunde liegende gemeinsame Idee besteht darin, den Rohgasstrom in Spitzenzeiten soweit zu verringern, dass die Aufbereitungsanlage mit maximaler Auslastung läuft, wobei ein Rohgasüberschuss nicht ungereinigt an die Atmosphäre abgegeben werden muss. Anlagen, die nach dem erfindungsgemässen Verfahren betrieben werden, können auf eine durchschnittlich zu erwartende Dämpfemenge ausgelegt werden.

Die erfindungsgemässe Steuerung des Volumenstromes kann bei allen Anlagen eingesetzt werden, in denen dampf- und/oder gasförmige Stoffgemische mittels einer Membraneinheit aufbereitet werden. Neben der Rückgewinnung von Kohlenwasserstoffen aus Kohlenwasserstoff-Luftgemischen kann das erfindungsgemässe Verfahren auch zur Edelgas- bzw. Gastrocknung sowie zur Auf- und Abkonzentrierung von Stoffen aller Art eingesetzt werden.

Die Rückgewinnung dampf- und/oder gasförmiger Stoffe bzw. der Kohlenwasserstoffe aus dem Rohgasstrom und/oder aus dem angereicherten Gemisch nach dessen Austritt aus der Membraneinheit kann auf herkömmliche Weise durch direkte oder indirekte Kondensation erfolgen.

Bezüglich der Vorrichtung führt zur erfindungsgemässen Lösung der Aufgabe, dass zur zeitweiligen Aufnahme eines den maximalen Volumendurchsatz der Membraneinheit übersteigenden Volumenanteiles des Rohgasstromes bzw. der in diesem Volumenanteil enthaltenen dampf- und/oder gasförmigen Stoffe oder Kohlenwasserstoffe vor der Membraneinheit ein Speicherelement angeordnet ist.

Als Speicherelement kann ein Volumenspeicher in der Form eines herkömmlichen Dämpfespeichers eingesetzt werden. Als bevorzugte Möglichkeit eines Speicherelementes bietet sich ein Adsorptionsspeicher mit einem die dampf- und/oder gasförmigen Stoffe bzw. die Kohlenwasserstoffe aufnehmenden Adsorptionsmittel an. Als Beispiele für mögliche Adsorptionsmittel seien hier Aktivkohle und Silicagel sowie sogenannte Verbund- oder Mehrkomponentenadsorptionsmittel genannt.

Bei der bevorzugten Variante eines Adsorptionsspeichers als Speicherelement kann der Membraneinheit zur Unterstützung der Durchströmung des Adsorptionsspeichers eine vom Retentatstrom der Membraneinheit betriebene, saugseitig mit dem Adsorptionsspeicher verbundene Gasstrahlpumpe nachgeschaltet sein.

Eine zur Durchführung der zweiten Alternative des erfindungsgemässen Verfahrens geeignete Vorrichtung zeichnet sich dadurch aus, dass zur zeitweiligen Verarbeitung eines den maximalen Volumendurchsatz der Membraneinheit übersteigender Volumenanteil des Rohgasstromes zur ersten Membraneinheit eine zweite Membraneinheit parallel geschaltet ist.

Zur Unterstützung der Durchströmung der zweiten Membraneinheit kann -- in Analogie zur vorstehend beschriebenen Vorrichtung mit einem Adsorptionsspeicher -- der ersten Membraneinheit eine vom Retentatstrom dieser ersten Membraneinheit betriebene, saugseitig mit der zweiten Membraneinheit verbundene Gasstrahlpumpe nachgeschaltet sein.

Ein wesentlicher Vorteil des vorstehend beschriebenen Einsatzes einer Gasstrahlpumpe liegt darin, dass der Druck in den Zuführungsleitungen zum Adsorptionsspeicher bzw. zur zweiten Membraneinheit verhältnismässig gering gehalten werden kann. Zudem können die Zuführungsleitungen zum Adsorptionsspeicher bzw. zur zweiten Membraneinheit mit entsprechend kleineren Querschnitten dimensioniert werden. Da die Gasstrahlpumpe ihre Betriebsenergie aus dem unter Druck stehenden Retentatstrom der Membraneinheit bezieht und diese Energie ohnehin vernichtet wird, ergeben sich bei Durchführung der oben beschriebenen Massnahmen mit dem Einsatz einer Gasstrahlpumpe in jedem Fall Kosteneinsparungen.

Ein bevorzugter Anwendungsbereich des erfindungsgemässen Verfahrens bzw. der Vorrichtung liegt in der Aufbereitung eines Rohgasstromes mit stark unterschiedlichem Volumenstrom, wie er beispielsweise bei Benzinbetankungsanlagen zum Beladen von Tankkraftwagen auftritt.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- - Fig. 1: das Verfahrensfliessbild einer ersten Ausführungsform einer Kohlenwasserstoff-Rückgewinnungsanlage mit einem Adsorptionsspeicher;
- - Fig. 2: das Verfahrensfliessbild einer zweiten Ausführungsform einer Kohlenwasserstoff-Rückgewinnungsanlage mit einem Adsorptionsspeicher;
- - Fig. 3: das Verfahrensfliessbild einer ersten Ausführungsform einer Kohlenwasserstoff-Rückgewinnungsanlage mit einem Dämpfespeicher;
- - Fig. 4: das Verfahrensfliessbild einer zweiten Ausführungsform einer Kohlenwasserstoff-Rückgewinnungsanlage mit einem Dämpfespeicher;
- - Fig. 5: Das Verfahrensfliessbild einer Kohlenwasserstoff-Rückgewinnungsanlage mit einer zusätzlichen Membraneinheit als Alternative zu einem Speicherelement.

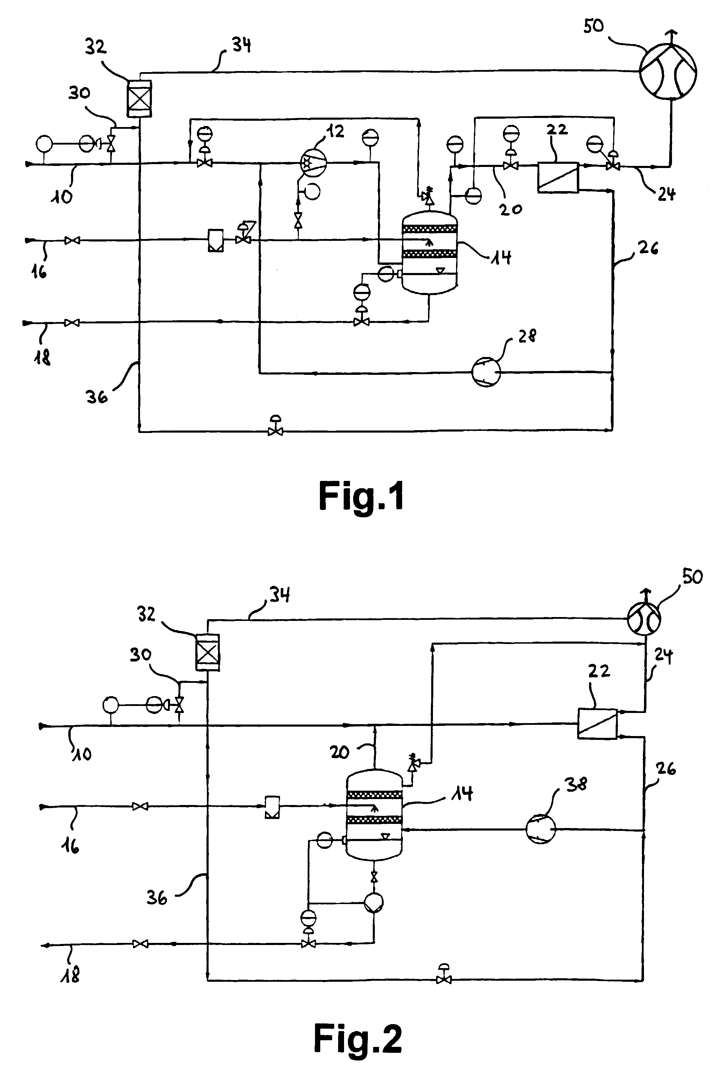

Gemäss Fig. 1 wird ein Rohgasstrom 10, der beispielsweise aus einer in der Zeichnung nicht dargestellten Beladestation für Tankkraftwagen stammt, über einen Verdichter 12 einem Gaswäscher 14 zugeführt. In diesem Gaswäscher erfolgt die eigentliche Rückgewinnung der Kohlenwasserstoffe durch direkte Kondensation in flüssigen Kohlenwasserstoffen, die von einem in der Zeichnung nicht dargestellten Tank über eine erste Leitung 16 zugeführt und über eine zweite Leitung 18 wieder in den Tank zurückgeführt werden. Der im Gaswäscher 14 ausgewaschene Gasstrom 20 wird auf eine Membraneinheit 22 geleitet. Aus der Membraneinheit 22 tritt ein abgereichertes Kohlenwasserstoff-Luftgemisch als Retentat 24 aus und wird an die Atmosphäre abgegeben. Das in der Membraneinheit 22 mit Kohlenwasserstoffen angereicherte Permeat 26 wird über einen zweiten Verdichter 28 vor den ersten Verdichter 12 zurückgeführt.

Uebersteigt der Rohgasstrom 10 den maximalen Volumendurchsatz der Membraneinheit 22, so kann ein Volumenteilstrom 30 einem Adsorptionsspeicher 32 zugeführt werden. Dieser Adsorptionsspeicher 32 ist beispielsweise ein Aktivkohlebett. Der aus dem Adsorptionsspeicher 32 austretende Abluftstrom 34 wird an die Atmosphäre abgegeben. In Zeiten der Unterbelastung der Anlage werden die im Adsorptionsspeicher 32 zwischengespeicherten Kohlenwasserstoffe als Volumenstrom 36 wieder ins System zurückgeführt.

Die Durchströmung des Adsorptionsspeichers 32 erfordert einen erhöhten Druck im Volumenteilstrom 30 bzw. entsprechend gross dimensionierte Querschnitte der Zuführungsleitungen. Zur Unterstützung der Durchströmung des Adsorptionsspeichers 32 ist eine Gasstrahlpumpe 50 in den aus der Membraneinheit 22 austretenden Retentatstrom 24 geschaltet. Durch die Strömung des Retentats 24 entsteht in der Gasstrahlpumpe 50 ein Unterdruck bzw. ein Sog. Die Gasstrahlpumpe 50 ist unterdruck- bzw. sogseitig mit dem Adsorptionsspeicher 32 verbunden, so dass an der Austrittsseite des Adsorptionsspeichers 32 zur Unterstützung des Abtransports des Abluftstromes 34 ein das Druckgefälle über dem Adsorptionsspeicher 32 erhöhender Unterdruck entsteht.

Die in Fig. 2 gezeigte alternative Ausführungsform mit einem Adsorptionsspeicher unterscheidet sich von der Ausführungsform gemäss Fig. 1 im wesentlichen dadurch, dass der Rohgasstrom 10 direkt auf die Membraneinheit 22 geleitet wird und das Permeat 26 über eine Vakuumpumpe 38 in den Gaswäscher 14 geführt wird.

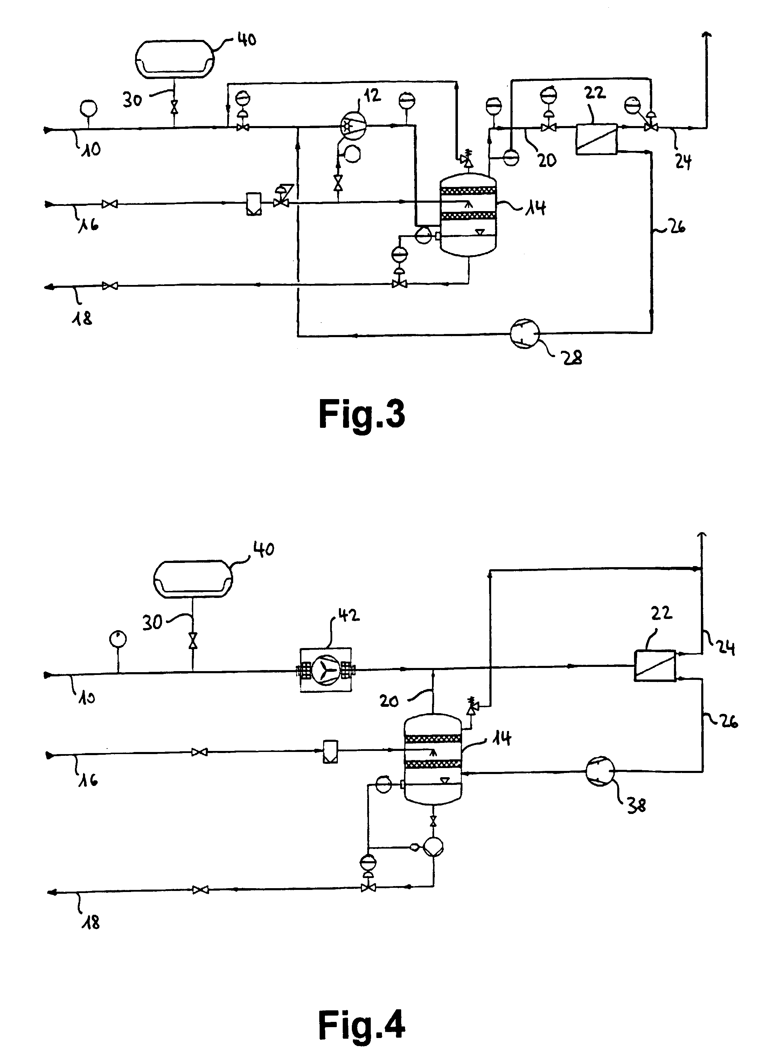

Die in Fig. 3 dargestellte Anlage entspricht im wesentlichen derjenigen von Fig. 1, wobei anstelle des Adsorptionsspeichers 32 ein Dämpfespeicher 40 in die Rohgasleitung 10 geschaltet ist. Dieser Dämpfespeicher 40 arbeitet praktisch drucklos und beginnt sich zu füllen, sobald der Rohgasstrom 10 den maximalen Volumendurchsatz der Membraneinheit 22 übersteigt. Sobald der Rohgasstrom 10 wieder abnimmt, beginnt sich auch der Dämpfespeicher 40 wieder zu entleeren.

Bei der in Fig. 4 gezeigten Ausführungsform einer Anlage mit Dämpfespeicher entspricht das Grundkonzept der Verfahrensführung zur Rückgewinnung der Kohlenwasserstoffe demjenigen der in Fig. 2 gezeigten Anlage, d.h. der Gaswäscher 14 ist der Membraneinheit 22 nachgeschaltet. Um den Druckabfall in der Membraneinheit 22 zu kompensieren, kann der Transport des Rohgasstromes 10 durch ein Gebläse 42 unterstützt werden.

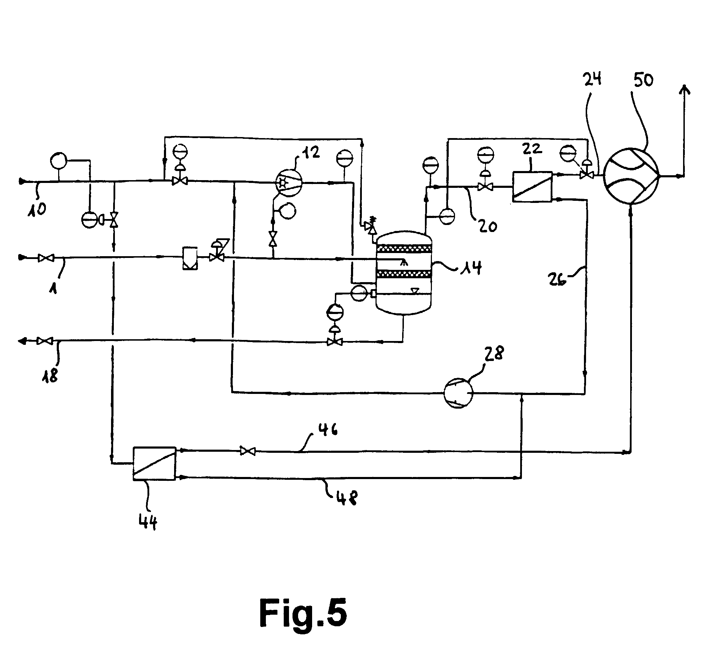

Die in Fig. 5 gezeigte Verfahrensführung zur Rückgewinnung der Kohlenwasserstoffe entspricht wiederum derjenigen von Fig. 1, wobei jedoch anstelle des Adsorptionsspeichers 32 eine zusätzliche Membraneinheit 44 parallel zur ersten Membraneinheit 22 geschaltet ist. Uebersteigt der Rohgasstrom den maximalen Volumendurchsatz der Membraneinheit 22, so wird dieser Ueberschussanteil auf die zusätzliche Membraneinheit 44 geleitet, wobei das Retentat 46 an die Atmosphäre abgegeben und das Permeat 48 in das System zurückgegeben wird.

Zur Unterstützung der Durchströmung der zusätzlichen Membraneinheit 44 dient auch bei dieser Ausführungsform eine in den Retentatstrom 24 der ersten Membraneinheit 22 geschaltete Gasstrahlpumpe 50. Die Gasstrahlpumpe 50 ist saugseitig an den retentatseitigen Ausgang der zweiten Membraneinheit 44 angeschlossen. Mit dieser Massnahme entsteht durch den schnelleren Abtransport des Retentats 46 über der Membraneinheit 44 ein erhöhtes Druckgefälle, so dass auch hier der Druck auf der Zufuhrseite kleiner gehalten werden kann, bzw. die Zuführungsleitungen kleiner dimensioniert werden können.

Mit dem Einsatz der Gasstrahlpumpe ergibt sich eine höhere Geschwindigkeit über die Membran und damit ein verbesserter Stoffübergang vom Feedstrom in den Permeatstrom.

## Patentansprüche

1. Verfahren zur Rückgewinnung, Aufkonzentrierung oder Abreicherung von dampf- und/oder gasförmigen Stoffen aus einem ein dampf- und/oder gasförmiges Stoffgemisch enthaltenden Rohgasstrom (10) in einer Anlage durch kontinuierliche Trennung mittels einer Membraneinheit (22),
dadurch gekennzeichnet, dass
ein den maximalen Volumendurchsatz der Membraneinheit (22) übersteigender Volumenanteil des Rohgasstromes (10) bzw. die in diesem Volumenanteil enthaltenen dampf- und/oder gasförmigen Stoffe vor Eintritt in die Membraneinheit zwischengespeichert und in Zeiten, wo der Rohgasstrom kleiner ist als der maximale Volumendurchsatz der Membraneinheit, der Anlage wieder zugeführt wird.

2. Verfahren zur Rückgewinnung von Kohlenwasserstoffen aus einem ein Kohlenwasserstoff-Luftgemisch enthaltenden Rohgasstrom (10) in einer Anlage durch kontinuierliche Trennung in ein kohlenwasserstoffreiches (26) und ein kohlenwasserstoffarmes Gemisch (24) mittels einer Membraneinheit (22), wobei das aus der Membraneinheit austretende kohlenwasserstoffarme Gemisch (24) als gereinigte Abluft an die Atmosphäre abgegeben, einer weiteren Nachbehandlungsstufe zugeführt oder recykliert wird, dadurch gekennzeichnet, dass ein den maximalen Volumendurchsatz der Membraneinheit (22) übersteigender Volumenanteil des Rohgasstromes (10) bzw. die in diesem Volumenanteil enthaltenen Kohlenwasserstoffe vor Eintritt in die Membraneinheit zwischengespeichert und in Zeiten, wo der Rohgasstrom kleiner ist als der maximale Volumendurchsatz der Membraneinheit, der Anlage wieder zugeführt wird.

3. Verfahren zur Rückgewinnung, Aufkonzentrierung oder Abreicherung von dampf- und/oder gasförmigen Stoffen aus einem ein dampf- und/oder gasförmiges Stoffgemisch enthaltenden Rohgasstrom (10) in einer Anlage durch kontinuierliche Trennung mittels einer Membraneinheit (22), dadurch gekennzeichnet, dass ein den maximalen Volumendurchsatz der Membraneinheit (22) übersteigender Volumenanteil des Rohgasstroms (10) über eine zur ersten Membraneinheit parallel geschaltete zweite Membraneinheit (44) geleitet wird.

4. Verfahren zur Rückgewinnung von Kohlenwasserstoffen aus einem ein Kohlenwasserstoff-Luftgemisch enthaltenden Rohgasstrom (10) in einer Anlage durch kontinuierliche Trennung in ein kohlenwasserstoffreiches (26) und ein kohlenwasserstoffarmes Gemisch (24) mittels einer Membraneinheit (22), wobei das aus der Membraneinheit austretende kohlenwasserstoffarme Gemisch (24) als gereinigte Abluft an die Atmosphäre abgegeben, einer weiteren Nachbehandlungsstufe zugeführt oder rezykliert wird, dadurch gekennzeichnet, dass ein den maximalen Volumendurchsatz der Membraneinheit (22) übersteigender Volumenanteil des Rohgasstroms (10) über eine zur ersten Membraneinheit parallel geschaltete zweite Membraneinheit (44) geleitet wird.

5. Vorrichtung zur Durchführung des Verfahrens nach Anspruch 1 oder 2, mit einer Membraneinheit (22), dadurch gekennzeichnet, dass zur zeitweiligen Aufnahme eines den maximalen Volumendurchsatz der Membraneinheit übersteigenden Volumenanteiles des Rohgasstromes (10) bzw. der in diesem Volumenanteil enthaltenen dampfund/oder gasförmigen Stoffe oder Kohlenwasserstoffe vor der Membraneinheit (22) ein Speicherelement (32,40) angeordnet ist.

6. Vorrichtung nach Anspruch 5, dadurch gekennzeichnet, dass das Speicherelement ein Volumenspeicher (40) ist.

7. Vorrichtung nach Anspruch 5, dadurch gekennzeichnet, dass das Speicherelement ein Adsorptionsspeicher (32) mit einem die dampf- und/oder gasförmigen Stoffe bzw. die Kohlenwasserstoffe aufnehmenden Adsorptionsmittel ist.

8. Vorrichtung nach Anspruch 7, dadurch gekennzeichnet, dass das Adsorptionsmittel Aktivkohle, Silicagel, oder ein Verbund- oder Mehrkomponentenadsorptionsmittel ist.

9. Vorrichtung nach Anspruch 7, dadurch gekennzeichnet, dass zur Unterstützung der Durchströmung des Adsorptionsspeichers (32) der Membraneinheit (22) eine vom Retentatsstrom (24) der Membraneinheit (22) betriebene, saugseitig mit dem Adsorptionsspeicher (32) verbundene Gasstrahlpumpe (50) nachgeschaltet ist.

10. Vorrichtung zur Durchführung des Verfahrens nach Anspruch 3 oder 4, mit einer Membraneinheit (22), dadurch gekennzeichnet, dass zur zeitweiligen Verarbeitung eines den maximalen Volumendurchsatz der Membraneinheit (22) übersteigenden Volumenanteiles des Rohgasstromes (10) zur ersten Membraneinheit eine zweite Membraneinheit (44) parallel geschaltet ist.

11. Vorrichtung nach Anspruch 10, dadurch gekennzeichnet, dass zur Unterstützung der Durchströmung der zweiten Membraneinheit (44) der ersten Membraneinheit (22) eine vom Retentatstrom (24) der ersten Membraneinheit (22) betriebene, saugseitig mit der zweiten Membraneinheit (44) verbundene Gasstrahlpumpe (50) nachgeschaltet ist.

12. Anwendung des Verfahrens nach einem der Ansprüche 1 bis 4, bzw. Verwendung der Vorrichtung nach einem der Ansprüche 5 bis 11 zur Aufbereitung eines Rohgasstromes mit stark unterschiedlichem Volumenstrom.
